**Europäisches Patentamt**

**European Patent Office**

**Office européen des brevets**

(19)

(11) Veröffentlichungsnummer : **0 326 794 B1**

(12)

# EUROPÄISCHE PATENTSCHRIFT

(45) Veröffentlichungstag der Patentschrift :
**12.08.92 Patentblatt 92/33**

(51) Int. Cl.$^5$ : **E01B 29/46**

(21) Anmeldenummer : **88890022.2**

(22) Anmeldetag : **01.02.88**

(54) **Verfahren zum elektrischen Abbrennstumpf-Verschweissen der beiden aneinanderstossenden Enden, insbesondere im Stossbereich eines Schienenstranges eines verlegten Gleises.**

(43) Veröffentlichungstag der Anmeldung :
**09.08.89 Patentblatt 89/32**

(45) Bekanntmachung des Hinweises auf die
Patenterteilung :
**12.08.92 Patentblatt 92/33**

(84) Benannte Vertragsstaaten :
**AT DE ES FR GB IT NL SE**

(56) Entgegenhaltungen :
**EP-A- 0 132 227**
**GB-A- 2 000 829**
**Railway Gazette, Vol. 133, Oktober 1977, London K. Riessberger, "Flash-butt welding using mobile on truck machines" Seite 388- 390**

(73) Patentinhaber : **Franz Plasser**
**Bahnbaumaschinen- Industriegesellschaft**
**m.b.H.**
**Johannesgasse 3**
**A-1010 Wien (AT)**

(72) Erfinder : **Theurer, Josef, Ing.**
**Johannesgasse 3**
**A-1010 Wien (AT)**
Erfinder : **Oellerer, Friedrich, Dipl.Kfm.**
**Nöbauerstrasse 71**
**A-4040 Linz (AT)**
Erfinder : **Gruber, Leopold Rudolf**
**Alpenlandhof Nr. 1**
**A-3270 Scheibbs (AT)**

## Beschreibung

Die Erfindung betrifft ein Verfahren zum elektrischen Abbrennstumpf-Verschweißen der beiden aneinanderstossenden Enden insbesondere im Stoßbereich eines Schienenstranges eines verlegten Gleises mittels einer mobilen Abbrennstumpf-Schweißmaschine, mit einem quer- und höhenverstellbaren Schweißaggregat, das zwei über Hydraulik-Zylinder in Schienenlängsrichtung zueinander verschiebbare Aggregat-Hälften mit jeweils einem - über hydraulische Klemm-Zylinder beaufschlagbaren - Klemmund Schweißbacken-Paar aufweist, gemäß welchem das Schweißaggregat auf den Schienenstoß bzw. der Schienenlücke aufgesetzt wird - insbesondere bei vorherigem Lösen bzw. Lockern der Schienenbefestigungen von den Schwellen - und wobei die beiden Schienenenden jeweils von dem elektrisch/hydraulisch beaufschlagbaren Klemmund Schweißbakken-Paar erfaßt und an Hand einer Steuereinrichtung nach einem Schweißprozeß-Programm zu- bzw. voneinander bewegt und mit abschließendem hydraulischen Stauchschlag miteinander verschweißt werden, wonach gegebenenfalls der überstehende Schweißwulst durch neuerliche hydraulische Beaufschlagung des Klemm- und Schweißbacken-Paares der einen Aggregat-Hälfte und der anderen mit einer Abschermesservorrichtung verbundenen Aggregat-Hälfte entfernt wird.

Eine bekannte, von der gleichen Anmelderin entwickelte fahrbare elektrische Abbrennstumpf-Schweißmaschine - gemäß dem Plasser & Theurer-Prospekt K 355 ABD vom Feber 1986 - weist einen auf Fahrwerken abgestützten und über einen Fahrantrieb selbstverfahrbaren Fahrgestellrahmen auf. Auf der Maschine ist ein Antriebsmotor vorgesehen, der mit einem Hydraulik-Pumpenaggregat und einem Generator für die Stromversorgung des Schweißaggregates verbunden ist. Zwischen den beiden endseitig angeordneten Fahrkabinen ist ferner ein Generatorschrank und eine Schweißprozeß-Steuereinrichtung vorgesehen. Eine der beiden Fahrkabinen ist in Maschinenlängsrichtung über den angrenzenden Maschinenbereich längsverschiebbar und im Stirnbereich offen ausgebildet. In diesem Bereich ist ein doppelarmiger, teleskopartig verlängerbarer Auslegerkran angeordnet, der mit dem Fahrgestellrahmen um eine vertikale Achse verschwenkbar verbunden ist. Dieser in seinem vorderen, freien Endbereich mit dem Abbrennstumpf-Schweißaggregat über eine Aufhängevorrichtung verbundene Auslegerkran ist mit Hydraulik-Antrieben zur seitlichen Verschwenkung und Längsverschiebung des Auslegerkranes verbunden. Bei zurückgeschobener Fahrkabine ist der Aktionsradius des Auslegerkranes so weit vergrößert, daß dieser bis zu einem rechten Winkel zur Maschinenlängsachse seitlich verschwenkbar ist, wobei die Schweißaggregatmitte bis zu einer Entfernung von bis zu 3250 mm von der Gleismitte verstellbar ist. Bei Überstellfahrten wird das Schweißaggregat mit Hilfe des Auslegerkranes in die Fahrkabine eingefahren und diese nach Verschieben bis zum Ende des Fahrgestellrahmens an deren Stirnseite geschlossen.

Das über die Aufhängevorrichtung höhenverstellbare Schweißaggregat besteht aus zwei in Schienen- bzw. Maschinenlängsrichtung hintereinander angeordneten Aggregat-Hälften, die mit Hilfe von zwei Hydraulik-Zylindern in Schienenlängsrichtung zueinander bewegbar sind. An der Unterseite jeder Aggregat-Hälfte ist jeweils ein zur beidseitigen Anlage an den Schienensteg vorgesehenes Klemm- und Schweißbacken-Paar angeordnet, das zusätzlich zur Einspannfunktion auch als Elektrode zur Übertragung des Schweißstromes dient. Durch die Ausbildung als mechanisches Hebelsystem jeder Aggregat-Hälfte ist jedes Klemm- und Schweißbacken-Paar über einen mit dem Hebelsystem verbundenen Hydraulik-Klemm-Zylinder an den Schienensteg anpreßbar. Die - mit den Hydraulik-Zylindern zur Längsverschiebung verbundene - Schweißaggregat-Hälfte weist eine hydraulische Abschervorrichtung zum Entfernen des bei der Schweißung entstehenden Schweißwulstes auf. Am Schweißaggregat befindet sich ein Steuerpult zum Ein- und Ausschalten des Schweißablaufes sowie zur Kontrolle wichtiger Grundfunktionen.

Nach dem Vorfahren der Schweißmaschine und dem Absenken bzw. Zentrieren des Schweißaggregates auf die Schienenlücke werden die beiden Schienenendbereiche durch die beiden Klemm- und Schweißbakken-Paare unter Beaufschlagung der beiden Klemm-Zylinder eingespannt. Die Schienenenden werden bei diesem Einspannvorgang gleichzeitig auch genauestens höhen- und richtungsmäßig justiert. Mit einem Betriebsschalter "Automatik" wird der Schweißstrom und das Ablaufprogramm für den eigentlichen Schweißvorgang eingeschaltet. Vorerst werden die durch die Klemmund Schweißbacken-Paare festgeklemmten Schienenenden unter Beaufschlagung der beiden Hydraulik-Antriebe durch die beiden Aggregat-Hälften mit ca. o,25 mm/sek. zueinandergeführt. Bei Berührung der Schienenenden erreicht der Schweißstrom durch den dabei entstehenden Kurzschluß einen ersten Spitzenwert. Dies erkennt die Strom-Meßeinrichtung und bringt den Schienenvorschub sofort zum Stillstand. Die Schienenenden erwärmen sich dabei kräftig. Nach ca. einer Sekunde zu hohen Stromes wird eine Rückschubbewegung eingeleitet, welche die eventuell schon zusammenklebenden Schienenenden wieder auseinanderreißt. Dazu werden die beiden Hydraulik-Antriebe in der Gegenrichtung beaufschlagt. Sinkt der Schweißstrom durch Öffnen der Berührungsstelle der beiden Schienenenden wieder ab, wird sofort neuerlich eine Vorschubbewegung mit der entsprechenden Soll-Geschwindigkeit eingeleitet. Dieser Vorgang wiederholt sich einige Male, wobei die Schienenenden immer heißer werden. Ist die Berührungsstelle heiß genug, kommt es erstmals zu einem Schweiß-Schmelzvorgang. Nach ca. dreißig Sekunden dieser als instabile Phase bezeichneten Schweißdauer führt die weitere Erhitzung der Schweißstelle zu einer stabilen Schweißphase, bei welcher der Vorschub - d.h. die Zueinanderbewegung der beiden Schienenenden - mit konstanter Soll-Geschwindigkeit abläuft. Nach Ablauf der vorgewählten Schweißzeit wird die Progressions-Phase eingeleitet. Innerhalb von ca. zehn Sekunden wird die Vorschubgeschwindigkeit auf den drei- bis vierfachen Wert erhöht. Der Schweißstrom steigt entsprechend an, wobei die Schweißstelle ihre höchste Temperatur erreicht. Danach wird der Schweißstrom abgeschaltet und die momentane Wegposition der Klemm- und Schweißbacken-Paare gespeichert. Gleichzeitig wird ein hydraulisches Stromregel-Ventil der Steuereinrichtung ausgeschaltet und ein hydraulisches Ventil mit vergrößertem Durchfluß eingeschaltet. Zur Einleitung des sogenannten abschließenden Stauchschlages werden nun die beiden Schienenenden mit großer Geschwindigkeit und unter Einwirkung des am Ende der Schweißphase erhöhten Druckes kräftig ineinandergeschoben, bis die Wegänderung der Schweißbacken einen vorgewählten Soll-Wert erreicht hat (bis ca. 14 mm). Bei Erreichung des Soll-Wertes wird der Stauchschlag-Vorschub abgeschaltet. Die Klemm- und Schweißbacken-Paare halten die nun miteinander verschweißten Schienenenden in dieser Lage noch für einige Sekunden fest, bis die Schweißstelle etwas abgekühlt ist. Danach werden die Klemm- und Schweißbacken-Paare drucklos gesteuert und ein Rückschub eingeleitet, zwei entsprechend dem Schienenprofilquerschnitt geformte Abschermesser der Abschervorrichtung hiebei geschlossen und durch einen neuerlichen Vorschub der entsprechenden Aggregat-Hälfte wird der überstehende Schweißwulst abgeschert. Anschließend werden die Klemm- und Schweißbacken-Paare sowie die Abschermesser geöffnet und das Schweißaggregat von der Schiene abgehoben. Anschließend ist die Maschine mit vorkragend angeordnetem Schweißaggregat zum nächsten zu verschweißenden Schienenstoß verfahrbar. - Diese mobile, gleisverfahrbare Abbrennstumpf-Schweißmaschine der gleichen Anmelderin ist auch - mit den verschiedenen Einsätzen und Arbeitsmethoden sowie insbesondere mit dem Schweißvorgang selbst - in der Zeitschrift "Railway Gazette", Oktober 1977 - ausführlich beschrieben (vgl. Oberbegriff des Anspruchs 1).

Ein bekanntes elektrisches Abbrennstumpf-Schweißaggregat für eine Schweißmaschine dieser Art - gemäß DE-PS 1 465 o42 - weist zwei Greifklauen-Spannvorrichtungen zum Einstellen und Festklemmen der Schweißstücke auf. Diese Spannvorrichtungen besitzen eine gemeinsame Drehachse und sind entlang dieser mittels zweier gegen diese versetzter Kolbenstangen relativ zueinander zum Abschmelzen und Stauchen verschiebbar, wobei die Kolbenstangen symmetrisch zum Schweißstück und mit diesem in einer Ebene liegen und die Spannvorrichtungen miteinander verbinden. Die Drehachse der Spannvorrichtungen ist als Hohlachse ausgebildet, die einen Steuerschieber zur gleichmäßigen Beaufschlagung von Stauchzylindern enthält, wobei der Steuerschieber mittels eines auf die Hohlachse aufgesetzten elektromechanischen Antriebes betätigbar ist.

Ein weiteres bekanntes elektrisches Abbrennstumpf-Schweißaggregat für eine Schweißmaschine dieser Art - gemäß GB-PS 1 513 o14 - weist - wie eingangs bereits beschrieben - Klemm- und Schweißbacken-Paare auf, die über ein mit einem Klemmzylinder verbundenes Hebelsystem an den Schienensteg anpreßbar sind. Die zum Abscheren des Schweißwulstes nach Beendigung des Schweißvorganges vorgesehene Abschervorrichtung weist insgesamt vier Abschermesser auf, die in Arbeitsstellung das Querschnittsprofil der Schiene zur Gänze umschließen. Mit einer derartigen integrierten Abschervorrichtung ist der Schweißwulst in vorteilhafter Weise ohne Zuhilfenahme einer unabhängigen Zusatzeinrichtung mit dem Schweißaggregat abscherbar.

Um das Heranziehen der einzelnen vorher von den Schwellen gelösten Schienenstränge - für die Durchführung des elektrischen Abbrennstumpf-Schweißverfahrens mittels solcher Schweißmaschinen - zu ermöglichen, sind weiters sogenannte Schienenzug-Vorrichtungen - z.B. gemäß der GB-PS 1 294 216 - bekannt. Diese als ringförmige Baueinheit ausgebildete Vorrichtung weist zwei in Schienenlängsrichtung voneinander distanzierte Klemmbacken-Paare auf, die jeweils über ein ober- und unterhalb der Schiene angeordnetes Jochglied um eine vertikale Achse drehbar miteinander verbunden sind. Die Klemmbacken sind über einen kurzen Hebel mit in Schienenlängsrichtung verlaufenden, über eine Handpumpe beaufschlagbaren und parallel zur Schienen-Horizontalebene angeordnete Hydraulik-Zylinder bzw. in Längsrichtung derselben verlaufenden Zuggliedern verbunden. Bei Beaufschlagung der beiden Hydraulik-Zylinder werden die Klemmbacken an den Schienensteg angepreßt und nehmen unter weiterer Beaufschlagung der Hydraulik-Zylinder die beiden Schienenendbereiche für eine Zueinanderbewegung derselben mit. Derartige bekannte Schienenzug-Vorrichtungen werden zur Vorbereitung beim nachfolgenden Schweißvorgang durch Abbrennstumpf-Schweißen oder Alu-Thermit-Schweißen eingesetzt, insbesondere für den richtigen Abstand der beiden Enden zweier zu verschweißender Schienenstücke.

Eine weitere derartige Schienenzug-Vorrichtung - gemäß GB-PS 1 161 307 - weist ebenfalls mit Hydraulik-Zylindern bzw. Zuggliedern verbundene, quer zur Schienenlängsrichtung angeordnete Joch- oder Halteglieder auf. Diese sind jedoch jeweils mit einem Paar von Keilen verbunden, die jeweils zur Anlage an die Schienenkopf-Seitenflanke ausgebildet sind und sind auf Grund der relativ geringen Zugkraft lediglich zum Heranziehen kürzerer Schienenabschnitte geeignet.

EP 0 326 794 B1

Es ist aber auch bekannt - gemäß AT-PS 357 594 der gleichen Anmelderin bzw. Patentinhaberin - um das Heranziehen der von den Schwellen gelösten Schienen zu erleichtern - bei Anordnung des Schweißaggregates zwischen den Fahrwerken einer Schweißmaschine - eine als Hubstempel ausgebildete Abstützvorrichtung im Bereich eines der Maschinenfahrwerke anzuordnen. Dieser Hubstempel wird vor dem Schweißvorgang auf die Schwellen abgesenkt, bis sich das benachbarte Maschinenfahrwerk geringfügig von den Schienen abhebt. Die somit vom Maschinengewicht entlastete Schiene kann nun problemlos insbesondere auch für den abschließenden Stauchschlag unter Bildung des Schweißwulstes in Richtung zum Schienenstoß verschoben werden.

Die beschriebenen mobilen Schienen-Schweißaggregate verfügen derzeit über ausreichende Zugkraft für die Abbrennstumpf-Schweißung inklusive Stauchschlag mit einem geringen Kraftüberschuß für das Schienenziehen. Dies reicht aus zum Verschweißen kurzer Schienen bzw. für das Schweißen von Langschienen, sofern diese auf Rollen vorgelagert sind. Bei Schlußschweißungen werden die Schienen aus den Befestigungen herausgehoben und die beim Schweißen auftretende Längenänderung durch Einfügen eines entsprechenden Schienenstückes ausgeglichen. Für das Verschweißen von längeren Schienenstrangabschnitten, insbesondere von nicht auf Rollen vorgelagerten Langschienen, weiters beim Herausschneiden von sogenannten Thermit-Schweißstößen mit relativ großen Schweißlücken, die durch einen Abbrennstumpf-Schweißstoß ersetzt werden müssen, sowie für Schlußschweißungen bei Temperaturen unterhalb der Normal-Temperatur und bei durchgehend verschweißten Gleisen ist aber eine größere Zugkraft erwünscht.

Durch die GB-A-2 000 829 ist ein Schienenrückgestell mit zwei jeweils endseitig angeordneten Spannpressen und zwei dazwischen befindlichen Hauptspannpressen bekannt. Diese Pressen sind in einer senkrecht zur Schienenlängsrichtung verlaufenden Richtung wirksam und dienen zur Zentrierung der beiden miteinander zu verschweißenden Schienenenden. In eine mittige Öffnung dieses Schienenrückgestells ist eine Baugruppe bedarfsweise einschwenkbar, die in Schienenlängsrichtung verlaufende Antriebszylinder zur Durchführung einer geringfügigen Längsverschiebung eines Schienenendes bzw. zur Abgratung des Schweißwulstes aufweisen. Dieses Schienenrückgestell eignet sich auf Grund der gering dimensionierten mittigen Öffnung lediglich zur Durchführung einer aluminothermischen Schweißung.

Die Aufgabe der Erfindung besteht daher darin, ein Verfahren zum elektrischen Abbrennstumpf-Schweißen der eingangs beschriebenen Art zu schaffen, mittels welchem verbesserte Einsatzmöglichkeiten, insbesondere größere Zugkräfte sowohl für das Heranziehen des Schienenstranges als auch beim abschließenden Stauchschlag selbst erzielbar sind.

Diese Aufgabe wird mit einem Verfahren der eingangs beschriebenen Art dadurch gelöst, daß die beiden Schienenenden im Bereich unmittelbar außerhalb des Schweißaggregates durch Klemmbacken-Paare einer Schienen-Zieh- bzw. Verschiebevorrichtung erfaßt und unter gemeinsamer Beaufschlagung der Hydraulik-Zylinder des Schweißaggregates sowie von Antriebszylindern der Vorrichtung, die dazu mit den Hydraulik-Zylindern parallel geschaltet sind, miteinander verschweißt werden, wobei die Zylinder an Hand einer Steuereinrichtung über eine gemeinsame Antriebsquelle mit gleicher Vorschubgeschwindigkeit bewegt werden. Mit einem derartigen Verfahren ist das Schweißaggregat und die Schienenverschiebe-Vorrichtung in besonders vorteilhafter Weise an der gleichen Stelle für einen Schienenstoß kombiniert und gleichzeitig einsetzbar. Auf diese Weise ist die Zug- bzw. Schubkraft des Schweißaggregates ohne eine kostenaufwendige und komplizierte konstruktive Abänderung - wesentlich für die Verschiebung von Langschienen verstärkbar, so daß lediglich die entsprechenden Schienenbefestigungsmittel zu lockern sind und sich insbesondere eine besonders zeit- und arbeitsaufwendige Rollenlagerung bei schweren Schienen oder Langschienen erübrigt. In besonders vorteilhafter Weise kann die Schienen-Verschiebevorrichtung auch zur Vorbereitung eines schweißfähigen Schienenstoßes bei größeren Verschiebewegen ausgenützt werden, die z.B. nach der Abtrennung von Thermit-Schweißstößen erforderlich sind. Eine vorteilhafte Unterstützung des Schweißvorganges durch die Schienenverschiebe-Vorrichtung liegt ferner insbesondere beim abschließenden Stauchschlag vor, bei dem die beiden auf Schmelztemperatur erhitzten Schienenenden mit besonders hoher Kraft und relativ großem Verschiebeweg zur Herstellung der Schweißverbindung zusammengepreßt werden. Dadurch ist in sehr wirtschaftlicher und rascher Arbeitsweise ein qualitativ hochwertiges Schweißergebnis bzw. Abbrennstumpf-Schweißstoß auch bei ganz schweren Langschienen erzielbar. Durch die Parallelschaltung von Antriebs- und Hydraulik-Zylinder sind diese über die Schweißprozeß-Steuereinrichtung gleichzeitig und mit gleicher Geschwindigkeit beaufschlagbar. Auf diese Weise wird der sehr komplizierte Schweißprozeßablauf in keiner Weise durch die als Zusatzeinrichtung das Schweißaggregat umschließende Schienenverschiebe-Vorrichtung gestört.

Gemäß weiteren vorteilhaften erfindungsgemäßen Verfahrensschritten werden vorerst die beiden zusätzlichen äußeren Klemmbacken zentrisch und beidseits der Schienenlücke aufgesetzt und die beiden Schienenenden von diesen durch Beaufschlagung ihrer zugeordneten beiden Antriebszylinder erfaßt, wonach im Bereich zwischen diesen beiden Klemmbacken das Schweißaggregat aufgesetzt und die Schienenenden von

4

den beiden Klemm- und Schweißbacken der beiden Schweißaggregat-Hälften durch Beaufschlagung ihrer zugeordneten Klemm-Zylinder erfaßt werden, wobei - gegebenenfalls noch vor dem Aufsetzen des Schweißaggregates bzw. der hydraulischen Beaufschlagung der beiden Schweiß- und Klemmbacken - einer der beiden aneinandergereihten Schienenstränge durch stärkere Beaufschlagung der mit den beiden äußeren Klemmbakken verbundenen Antriebszylinder näher zum Schienenstoß herangezogen wird, um danach den eigentlichen Schweißprozeß vorzugsweise unter Beaufschlagung aller Hydraulik-Zylinder an Hand der Steuereinrichtung durchzuführen. Dieses Verfahren ermöglicht problemlos und störungsfrei auch ein Verschweißen der beiden Schienenenden bei grösseren Abständen bzw. Schienenlücken - wobei diese bei bereits für den Arbeitseinsatz positioniertem Schweißaggregat durch den vorerst alleinigen Einsatz der Schienenverschiebe-Vorrichtung verkleinerbar sind. Sobald ein durch die Klemm- und Schweißbacken-Paare des Schweißaggregates erfaßbarer kleiner Schienenenden-Abstand erreicht ist, sind das Schweißaggregat und die Schienenverschiebe-Vorrichtung gemeinsam wahlweise für eine Schienenverschiebung und/oder den Stauchschlag einsetzbar.

Schließlich werden gemäß einer weiteren vorteilhaften Verfahrensweise die beiden mit den zusätzlichen Klemmbacken-Paaren verbundenen Antriebszylinder wenigstens beim abschließenden Stauchschlag des elektrischen Abbrennstumpf-Schweißverfahrens der beiden Schienenenden gemeinsam mit den parallel geschalteten und mit den, den beiden Klemm- und Schweißbacken-Paaren zugeordneten Hydraulik-Zylindern - für eine gleichzeitige und gleichmäßig stärkere Schienen-Verschiebung - hydraulisch beaufschlagt. Dadurch ist insbesondere dieser den Schweißvorgang abschließende und eine besonders hohe Kraft erfordernde Stauchschlag auf diese Weise gemeinsam mit den Hydraulik-Antrieben des Schweißaggregates und den Antriebszylindern der Schienenverschiebe-Vorrichtung durchführbar, wodurch auch bei großen Schienenlücken und schweren, langen Schienen ein besonders genauer und in der Qualität hochwertiger Schweißstoß erzielbar ist.

Die Erfindung wird im folgenden an Hand eines in der Zeichnung dargestellten Ausführungsbeispieles näher beschrieben.

Es zeigen:

Fig.1 eine Seitenansicht einer erfindungsgemäß ausgebildeten Maschine zum elektrischen Abbrennstumpf-Verschweißen von Schienenstößen des verlegten Gleises mit einem Abbrennstumpf-Schweißaggregat und einer diesem zugeordneten Schienenverschiebe-Vorrichtung,

Fig.2 eine Teil-Draufsicht auf die Maschine gemäß Fig. 1 mit dem Abbrennstumpf-Schweißaggregat und der dieses umschließenden Schienenverschiebe-Vorrichtung in Arbeitsstellung über zwei miteinander zu verschweißenden Schienenstücke eines Schienenstranges,

Fig.3 eine Teil-Seitenansicht der erfindungsgemäß ausgebildeten Maschine entsprechend der Stellung des Schweißaggregates und der Schienenverschiebe-Vorrichtung nach Fig.2,

Fig.4 eine größere Detail-Seitenansicht des Abbrennstumpf-Schweißaggregates mit der dieses umschließenden Schienenverschiebe-Vorrichtung in Arbeitsposition,

Fig.5 eine Draufsicht auf das Abbrennstumpf-Schweißaggregat und die Schienenverschiebe-Vorrichtung gemäß Fig.4,

Fig.6 eine Ansicht des Schweißaggregates mitsamt der Schienenverschiebe-Vorrichtung in Schienenlängsrichtung gemäß dem Pfeil VI in Fig.5,

Fig.7 eine stark schematisch dargestellte Seitenansicht der erfindungsgemäß ausgebildeten Schienenverschiebe-Vorrichtung mitsamt dem von dieser umschlossenen Schweißaggregat in Arbeitsposition und

Fig.8 eine ebenfalls stark schematische Draufsicht auf die Schienenverschiebe-Vorrichtung und das Schweißaggregat gemäß Fig.7 mit einem Elektro-Hydraulik-Schaltschema zur gemeinsamen Steuerung der Schienen-Längsverschiebung durch die beiden Hälften des Schweißaggregates und die Schienenverschiebe-Vorrichtung.

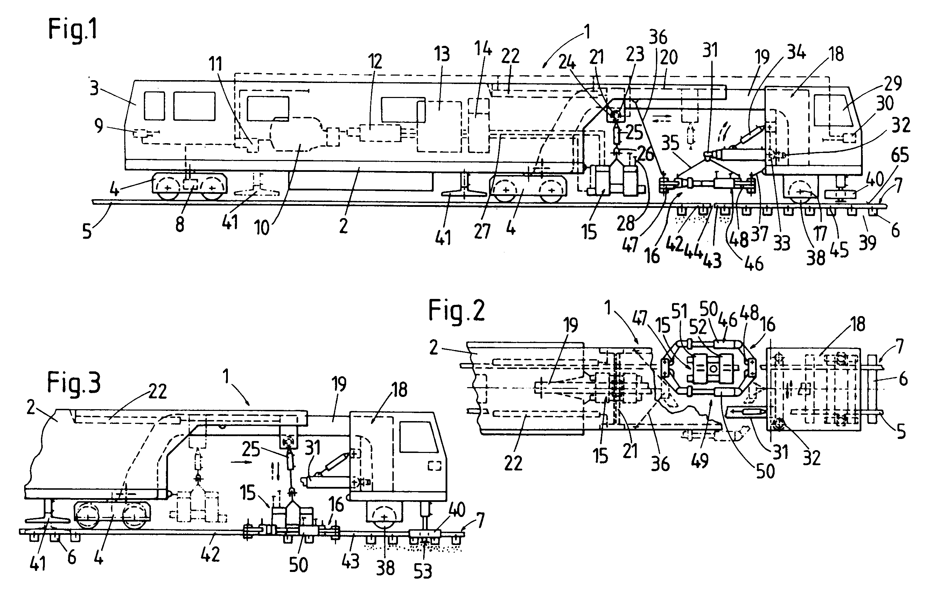

Die in Fig.1 dargestellte Maschine 1 zum elektrischen Abbrennstumpf-Verschweißen setzt sich aus einem langgestreckten Fahrgestellrahmen 2 mit einer Fahrkabine 3 zusammen und ist über Fahrwerke 4 auf einem aus zwei Schienen bzw. Schienensträngen 5 und Querschwellen 6 gebildeten Gleis 7 über einen Fahrantrieb 8 verfahrbar. Anschließend an die eine Steuereinrichtung 9 aufweisenden Fahrkabine 3 befindet sich ein Antriebsmotor 10, der über ein entsprechendes Getriebe sowohl ein Hydraulik-Pumpenaggregat 11 als auch einen Generator 12 antreibt. Dieser steht über elektrische Leitungen mit einem Generatorschrank 13 und einer Schweißprozeß-Steuereinrichtung 14 in Verbindung. Ein Abbrennstumpf-Schweißaggregat 15 und eine Schienenverschiebe-Vorrichtung 16 sind an einem über eine Fahrachse 17 abgestützten Anhänger 18 der Maschine 1 vorgesehen. Das Schweißaggregat 15 ist an einem zentralen und am Fahrgestellrahmen 2 gelenkig gelagerten brückenförmig ausgebildeten Maschinenrahmen 19 des Anhängers 18 angeordnet und über Längs- und Querführungen 2o,21 durch Hydraulik-Antriebe 22,23 längs- und querverstellbar. Der für die Querverschiebung vorgesehene Hydraulik-Antrieb 23 ist als Hydraulikmotor mit einem Ritzel ausgebildet, das in eine quer zur Maschinenlängsrichtung verlaufende Zahnstange 24 eingreift. Zur Höhenverstellung ist ein Hydraulik-Zylinder 25 vorgesehen, der über eine Aufhängevorrichtung 26 mit dem Schweißaggregat 15 verbunden ist. Zur Verbindung des Schweißaggregates 15 mit dem Fahrgestellrahmen 2 für die Überstellfahrt sind zweckmässig zwei lösbare Befestigungsstangen (strichlierte Mittelstellung) vorgesehen. Das Schweißaggregat 15 ist über Stromversorgungsleitungen 27 und über Hydraulikleitungen 28 mit der Schweißprozeß-Steuereinrichtung 14 und dem Hydraulik-Pumpenaggregat 11 verbunden.

Die Schienenverschiebe-Vorrichtung 16 ist im Bereich einer Fahrkabine 29 des Anhängers 18 mit einer Steuereinrichtung 3o über einen als Hydraulik-Ausleger ausgebildeten Antrieb 31 teleskopartig ausfahrbaren und über einen weiteren, als Seilzug ausgebildeten Antrieb 32 um eine Querführung 33 verschwenkbar gelagerten Antrieb 34 und mittels einer Aufhängevorrichtung 35 quer-, längs- und höhenverstellbar ausgebildet. Zur besseren Absicherung der Schienenverschiebe-Vorrichtung 16 für die Überstellfahrt (strichlierte Mittelstellung) ist diese über lösbare Befestigungsstangen 36,37 mit dem vorkragend ausgebildeten Teil des Fahrgestellrahmens 2 bzw. mit dem Maschinenrahmen 19 des Anhängers 18 verbunden. Der Anhänger 18 ist mit seinem als schienengebundene und mit Spurkranzrädern versehene Fahrachse ausgebildeten Fahrwerk 38 mittels auf den Schwellen und/oder am Schotterbett 39 aufsetzbarer hydraulisch beaufschlagbarer Hubstempel 40 zur Schienen- und gegebenenfalls Schwellenentlastung höhenverstellbar ausgebildet. Zwischen den beiden Fahrwerken 4 des Fahrgestellrahmens 2 ist wenigstens ein weiterer höhenverstellbarer Hubstempel 41 zur Auflage auf den Schwellen 6 vorgesehen. Wie in Fig.1 und 2 ersichtlich, befindet sich die Schienenverschiebe-Vorrichtung 16 oberhalb eines durch Distanzierung zweier angrenzender Schienenendbereiche 42,43 gebildeten Schienenstoßes bzw. einer Schienenlücke 44. Mit 45 sind die zur lösbaren Verbindung der Schienen 5 mit den Schwellen 6 vorgesehenen Schienenbefestigungsmittel bezeichnet.

Wie in Fig.2 dargestellt, umfaßt die Schienenverschiebe-Vorrichtung 16 in der Arbeitsposition das Abbrennstumpf-Schweißaggregat 15 in einer umfassenden Anordnung in Schienen-Horizontalebene. Die Schienenverschiebe-Vorrichtung 16 weist zwei zum Angriff des unmittelbar vor und hinter dem Schweißaggregat 15 angrenzenden Schienenendbereiches 42,43 vorgesehene und über eine Hydraulik-Zylinder-Kolben-Anordnung 46 beaufschlagbare und mit dieser miteinander verbundene Schienen-Klemmbacken-Paare 47,48 auf. Die Hydraulik-Zylinder-Kolben-Anordnung 46 der als ringförmige , mechanische Baueinheit 49 ausgebildeten Schienenverschiebe-Vorrichtung 16 weist zwei zueinander parallel verlaufende Antriebszylinder 5o auf.

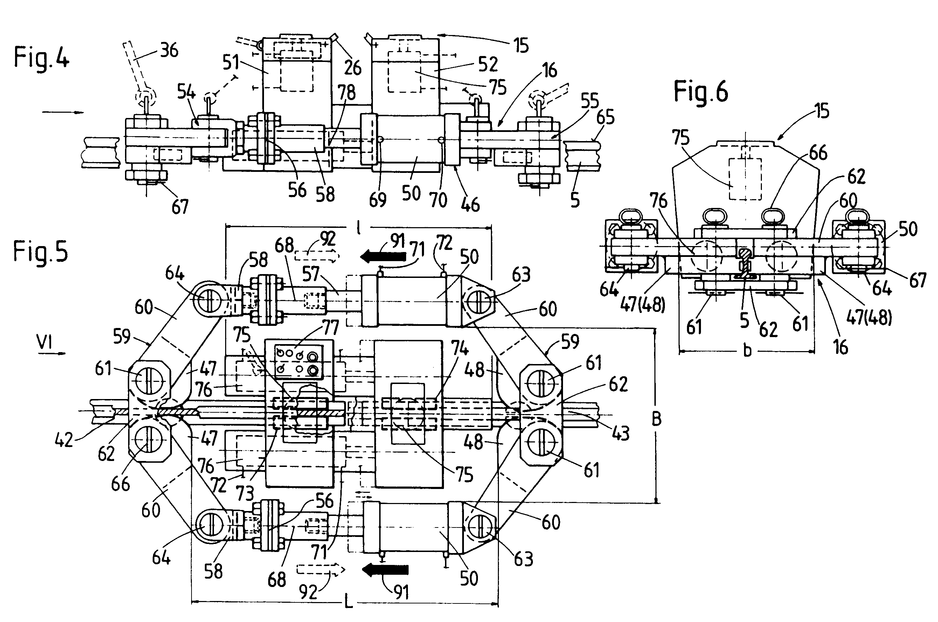

Die - wie in Fig.2 und im größeren Maßstab in den Fig.4 bis 6 ersichtlich - mit den jeweils zur Anordnung links und rechts des Schienenstoßes verlaufenden hydraulischen Antriebszylindern 5o versehene Schienenverschiebe-, insbesondere Schienenzug-Vorrichtung 16 weist einen inneren Querschnitt mit lichter Innenbreite B und lichter Innenlänge L auf, der zur umfassenden Aufnahme des Schweißaggregates 15 in Schienen-Horizontalebene größer ist als der durch den Umfang der bei einem Hub von etwa 7o cm maximal voneinander verstellten beiden Schweißaggregat-Hälften 51,52 gebildete Querschnitt mit der Breite b und der Länge 1. Im vorliegenden bevorzugten Ausführungsbeispiel beträgt die Breite b des ca. 2,5 t schweren Schweißaggregates 15 in Schienen-Horizontalebene 65 etwa 92,5 cm und die Länge 1 etwa 162,5 cm. Die lichte Innenbreite der ca. 65o kg schweren Verschiebe-Vorrichtung 16 - bei an den Schienensteg angepreßten Klemmbacken - beträgt dagegen etwa 1o7 cm und die lichte Innenlänge L etwa 172,5 cm.

Wie in Fig.3 dargestellt, stützt sich der Anhänger 18 der Maschine 1 über die beiden Hubstempel 40 auf die Schwellen 6 und durch einen weiteren Hilfs-Hubstempel 53 wahlweise auch auf dem Schotterbett ab. Dadurch wird das Fahrwerk 38 vom Gleis 7 abgehoben und das im Bild rechte Schienenstück mit seinem Schienenendbereich 43 vom Gewicht des Anhängers 18 entlastet. Auf diese Weise ist der rechte Schienenendbereich 43 nach Lösung der entsprechenden Schienenbefestigungsmittel 45 ungehindert in Richtung zum linken Schienenendbereich 42 für eine Verschweißung des Schienenstoßes verschieb- bzw. ziehbar. Für eine erforderlichenfalls wahlweise Verschiebung des linken Schienenendbereiches 42 kann auch das dem Schweißaggregat 15 benachbarte angrenzende Fahrwerk 4 der Maschine 1 mit Hilfe des auf die Schwellen 6 abgesenkten Hubstempels 41 angehoben werden.

Die in Fig. 4, 5 und 6 vergrößert dargestellte Schienenverschiebe-Vorrichtung 16 ist in ihrer Längsrichtung aus elektrisch voneinander isolierten, hintereinander angeordneten und jeweils symmetrisch zur Längs-Symmetrieebene der Vorrichtung 16 angeordneten Abschnitten 54,55 gebildet. Diese sind lediglich über eine elektrische Isolierungsschichte 56 fest, insbesondere über eine Schraubverbindung miteinander verbunden. Die elektrische Isolierungsschichte 56 ist jeweils in einem mit der Klemmbacke 47 und der Kolbenstange 57 des entsprechenden Antriebszylinders 5o verbundenen und in Zug- bzw. Schublängsrichtung verlaufenden Zugglied 58 quer zu dessen Längsrichtung verlaufend angeordnet. Die beiden über die Antriebszylinder 5o und den zugeordneten Kolbenstangen 57 beaufschlagbaren sowie zueinander spiegelbildlich angeordneten Klemmbacken-Paare 47,48 sind jeweils durch eine kniehebelartig wirkende Klemmhebelanordnung, die mit 59 bezeichnet ist, gebildet. Diese setzt sich aus jeweils mit einer Klemmbacke 47 bzw. 48 verbundenen Klemmhebeln 60 zusammen, die im Bereich der Klemmbacken-Paare 47,48 jeweils durch Steckbolzen 61 mit einem quer zur Maschinenlängsrichtung verlaufenden Jochglied 62 verbunden sind. Die jeweils gegenüberliegenden Enden der Klemmhebel 6o eines Klemmbacken-Paares 47 bzw. 48 sind im rechten Abschnitt 55 jeweils über Steckbolzen 63 mit dem zugeordneten Antriebszylinder 5o und im linken Abschnitt 54 jeweils über Steckbolzen 64 mit dem zugeordneten Zugglied 58 verbunden. Die Klemmhebel 6o sind, wie beschrieben, über Steckbolzen 61 und Jochglieder 62 schwenkbar gelagert, wobei zwischen dem unteren Jochglied 62 und dem jeweiligen Klemmhebel 6o ein vorzugsweise mit dem unteren Jochglied 62 verschweißter Distanzring vorgesehen ist.

Wie in Fig.4 ersichtlich, sind die einzelnen Teile der Schienenverschiebe-Vorrichtung 16 im wesentlichen in einer durch die beiden Schienenoberkanten der beiden Schienenstücke gebildeten Schienen-Horizontalebene 65 angeordnet. Jeder der senkrecht zu dieser Schienen-Horizontalebene 65 verlaufenden Steckbolzen 61,63,64 ist im oberen Endbereich mit einer Lasche 66 und im unteren Endbereich mit einem lösbaren Splint 67 verbunden. Die beiden jeweils zur Anordnung links und rechts eines Schienenstranges vorgesehenen hydraulischen Antriebszylinder 5o der hydraulischen Kolben-Zylinder-Anordnung 46 sind für eine gemeinsame Zug- bzw. Verschiebekraft von mehr als 12o t ausgebildet. Der Abstand der beiden Steckbolzen 63,64 in Längsrichtung der Schub- bzw. Zugachse 68 beträgt im vorliegenden Ausführungsbeispiel etwa 1,5 m, der sich durch die Hublänge der Antriebszylinder 5o von vorzugsweise etwa 3o cm entsprechend vergrößert. Dieser Abstand von etwa 1,5 m bei etwa halb ausgefahrenen Kolbenstangen 57 ermöglicht eine ungehinderte, berührungslose Umschließung des Abbrennstumpf-Schweißaggregates 15, wobei der Abstand der beiden parallel zueinander verlaufenden Schub- bzw. Zugachsen 68 zueinander bei an die Schiene angepreßten Klemmbacken-Paaren 47,48 etwa 1,4 m entspricht. Die beiden in Gleislängsrichtung verlaufend angeordneten Antriebszylinder 5o sind mit Anschlüssen 69,7o für eine hydraulische Beaufschlagung über flexible Hydraulikleitungen 71,72, die zum Pumpen-Aggregat 11 der Maschine 1 führen, ausgebildet.

Jede der beiden Schweißaggregat-Hälften 51,52 weist ein Klemm- und Schweißbacken-Paar 73,74 auf, das jeweils durch einen hydraulischen Klemmzylinder 75 an den Schienensteg anpreßbar ist. Zur Längsverschiebung der beiden Schweißaggregat-Hälften 51,52 in Schienenlängsrichtung zueinander sind zwei in Schienenlängsrichtung verlaufende Hydraulik-Zylinder 76 vorgesehen. Gemeinsam mit dieser Längsverschiebung der beiden Schweißaggregat-Hälften 51,52 (oder der einen zur anderen Hälfte) erfolgt auch eine Längsverschiebung der Klemm- und Schweißbacken-Paare 73,74 (oder des einen Paares zum anderen Paar) mitsamt den in diesen eingeklemmten Schienenendbereichen 42,43. Zur Bedienung des Schweißaggregates 15 und der Schienenverschiebe-Vorrichtung 16 ist eine am Schweißaggregat 15 befestigte Steuereinrichtung 77 vorgesehen. Die mit den Hydraulik-Zylindern 76 verbundene Schweißaggregat-Hälfte 51 weist eine integrierte hydraulische Abschervorrichtung 78 zum Entfernen des nach erfolgter Schweißung gebildeten Schweißwulstes auf.

In Fig.6 ist die Anlagedes Schienen-Klemmbacken-Paares 47 bzw. 48 an den Schienensteg erkennbar. Zur Übertragung sehr großer Klemmkräfte ist aus diesem Grund sowohl oberhalb als auch unterhalb der Schiene 5 ein die beiden in Querrichtung einander gegenüberliegenden Klemmhebel 60 verbindendes Jochglied 62 vorgesehen. Die Schienen-Klemmbacken 47,48 sind jeweils an die Unterseite des zugeordneten Klemmhebels 6o angeschweißt bzw. mit diesem aus einem Stück gebildet. Jeweils zwischen den beiden Klemmbacken 47 bzw. 48 und dem Schienensteg sind - zur verbesserten Klemm-Anlage und/oder zu Isolationszwecken - jeweils (wie auch in Fig.5 mit strichliertem Kreis angedeutet) Anlagebacken vorgesehen. Mit strichlierten Linien sind sowohl die beiden äußeren Antriebszylinder 5o der Schienenverschiebe-Vorrichtung 16 als auch die innerhalb der Vorrichtung 16 liegenden Hydraulik-Zylinder 76 des Schweißaggregates 15 dargestellt. Die Übertragung der Klemmkräfte auf die Schienen-Klemmund Schweißbacken-Paare 73,74 durch die vertikal angeordneten Klemm-Zylinder 75 erfolgt über ein nicht näher dargestelltes Hebelsystem im Schweißaggregat 15.

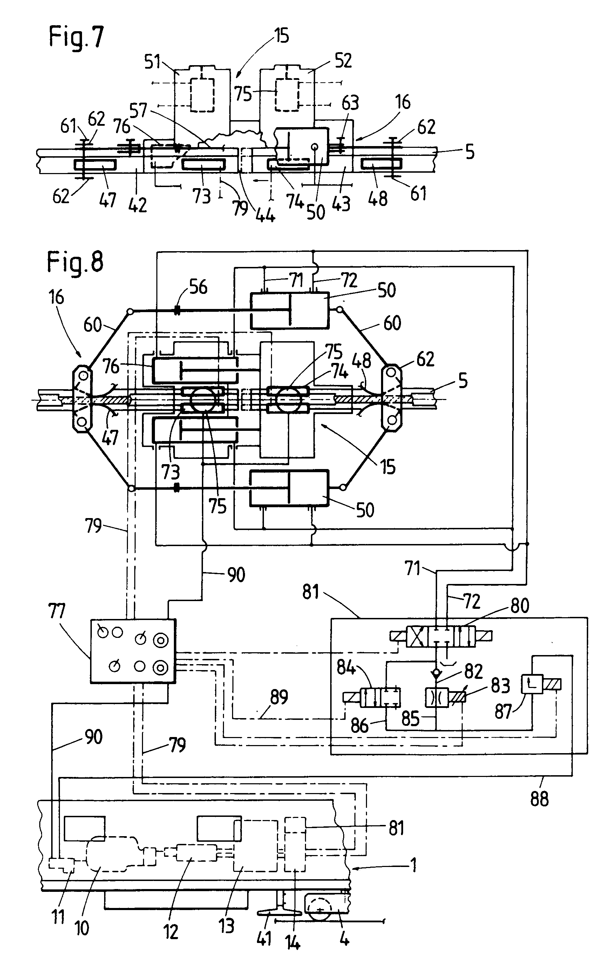

In der schematischen Darstellung nach Fig.7 sind ebenso die beiden an den Schienensteg angepreßten Klemm- und Schweißbacken-Paare 73,74 sowie die beiden äußeren Schienen-Klemmbacken-Paare 47,48 ersichtlich. Die Klemmund Schweißbacken-Paare 73,74 dienen gleichzeitig zur Einspannfunktion und auch als Elektroden, durch die der Schweißstrom über Stromleitungen 79 bzw. 27 (Fig.1) auf die beiden Schienenendbereiche 42,43 übertragen wird.

Wie in Fig.8 schematisch dargestellt, sind die zur Beaufschlagung der beiden Antriebszylinder 5o als auch der beiden Hydraulik-Zylinder 76 dienenden Hydraulikleitungen 71,72 einem 4/3-Wegeventil 8o eines hydraulischen Steuerblocks 81 zugeführt. Von diesem Wegeventil 8o führt eine weitere Hydraulikleitung 82 mit einem Rückschlagventil zu einem hydraulischen Proportional-Stromregel-Ventil 83. Außerdem weist der Steuerblock 81 ein 4/2-Wegeventil 84 auf, das bei einer weiteren, die Zu- bzw. Ableitung 82,85 des Stromregel-Ventils 83 miteinander verbindenden Hydraulikleitung 86 zugeordnet ist. Diese weist außerdem noch ein zweistufiges Druckregel-Ventil 87 auf, das über eine hydraulische Versorgungsleitung 88 bzw. 28 (Fig.1) mit dem Hydraulik-Pumpenaggregat 11 in Verbindung steht. Sämtliche im Steuerblock 81 befindlichen Ventile 8o,83,84,87 werden über Leitungen 89 von der am Schweißaggregat 15 befindlichen Steuereinrichtung 77 aus gesteuert. Diese ist außerdem mit einer Hydraulikleitung 9o bzw. 28 (Fig.1) zur Beaufschlagung der beiden Klemm-Zylinder 75 verbunden.

Im folgenden wird die Funktion der erfindungsgemäß ausgebildeten Maschine zum elektrischen Abbrennstumpf-Verschweißen an Hand der Fig.1 bis 8 näher beschrieben.

Sobald die Maschine 1 unter Beendigung der Überstellfahrt einen zu verschweißenden Schienenstoß 44 erreicht hat, werden die zur Fixierung der Schienenverschiebe-Vorrichtung 16 dienenden Stangen 36,37 und auch die das Schweißaggregat 15 haltenden Stangen entfernt. Durch Beaufschlagung des als Seilzug ausgebildeten Antriebes 32 wird die Schienenverschiebe-Vorrichtung 16 mitsamt den Antrieben 31 und 34 querverschoben, bis die Vorrichtung 16 symmetrisch über den zu verbindenden Schienenendbereichen 42,43 zu liegen kommt. In diesem schwebenden Zustand werden unter vorheriger Entfernung der entsprechenden Splinte 67 die beiden unteren Jochglieder 62 entfernt. Darauf wird die Schienenverschiebe-Vorrichtung 16 unter Beaufschlagung des Antriebes 34 auf das Gleis 7 bzw. die Schiene 5 aufgelegt, wobei die äußeren Steckbolzen 61 jeweils in einem Schwellenzwischenfach zu liegen kommen. Anschließend werden die beiden gelösten Jochglieder 62 zwischen den Schwellen 6 unter die Schiene 5 geführt und wieder auf die Steckbolzen 61 aufgeschoben und durch Einführen der gelösten Splinte 67 mit diesen verbunden. Die Schienenbefestigungsmittel 45 der in Fig.1 rechten unbelasteten Schiene 5 werden zweckmäßig während des Verschweißens dieses Schienenstranges, vorzugsweise durch einen eigenen Arbeitstrupp bereits gelöst.

Für den Fall, daß der Abstand der beiden Schienenendbereiche 42,43 sehr groß ist, z.B. über 5 cm, so kann die Schienenverschiebe-Vorrichtung 16 vorerst ohne Einsatz des Schweißaggregates 15 zum Heranziehen bzw. -schieben des unbelasteten und den Schienenendbereich 43 aufweisenden Schienenstranges eingesetzt werden. Zu diesem Zweck werden die Antriebszylinder 5o derart beaufschlagt, daß die Kolbenstangen 57 weitestmöglich aus dem Zylinder verschoben sind. Auf diese Weise ist die Distanz der beiden Schienen-Klemmbacken-Paare 47,48 zueinander am größten. Anschließend werden die beiden Antriebszylinder 5o der Gegenrichtung beaufschlagt, wodurch die Klemmhebel 6o unter Anpressen der Schienen-Klemmbacken-Paare 47,48 an den Schienensteg in Richtung zur Schiene 5 verschwenkt werden. Sobald diese geringfügige Verschwenkbewegung beendet ist, erfolgt unter weiterem Einschieben der Kolbenstangen 57 in die Antriebszylinder 5o ein Heranziehen des im Ausführungsbeispiel nach den Fig.1 bis 8 rechten Schienenendbereiches 43, da dieser durch Absenken der Hubstempel 4o vom Fahrwerk 38 und dem Gewicht des Anhängers 18 entlastet ist. Ist der Abstand der beiden Schienenendbereiche zueinander bzw. der Schienenstoß 44 nach Beendigung dieses Schienenziehvorganges noch immer zu groß, kann durch Wiederholung der beschriebenen weitestmöglichen Distanzierung der beiden Klemmbacken-Paare 46,47 zueinander - durch ein Ausschieben der Kolbenstangen 57 aus den Antriebszylindern 5o - ein neuer Schienenzieh- bzw. -schiebevorgang in der durch die Pfeile 91 dargestellten Richtung (Fig.5) eingeleitet werden.

Wahlweise ist es aber auch möglich, z.B. den linken Schienenendbereich 42 gemäß dem strichliert dargestellten Pfeil 92 (Fig.5) zu verschieben. Dazu wird zweckmäßig der Hubstempel 41 - wie mit strichpunktierten Linien in Fig.3 angedeutet - unter Abheben des Fahrwerkes 4 vom Gleis 7 auf die Schwellen abgesenkt. Außerdem sind die entsprechenden Schienenbefestigungsmittel 45 des linken Schienenstranges vorher zu lösen. Ebenso sind natürlich auch beide Schienenendbereiche 42,43 bei deren Entlastung von den Maschinenfahrwerken gleichzeitig zueinander verschiebbar.

Bereits während des beschriebenen Heranziehens eines Schienenstranges kann das Schweißaggregat 15 unter Beaufschlagung der Antriebe 22 und 23 in die ringförmige Baueinheit 49 der Schienenverschiebe-Vorrichtung 16 eingeführt und auf die beiden Schienenendbereiche 42,43 abgesenkt werden. Nach Anpressen der beiden Klemm- und Schweißbacken-Paare 73,74 an den Schienensteg durch Beaufschlagung der Klemm-Zylinder 75 ist der Schienenverschiebe-Vorgang wahlweise auch gemeinsam vom Schweißaggregat 15 und der Schienenverschiebe-Vorrichtung 16 bzw. auch nur vom Schweißaggregat 15 allein durchführbar. Für eine gemeinsame Übertragung der Zug- bzw. Schubkräfte werden die beiden Hydraulik-Zylinder 76 des Schweißaggregates 15 und die Antriebszylinder 5o der Verschiebe-Vorrichtung 16 über die gemeinsamen Hydraulikleitungen 7o,71 (Fig.8) gleichzeitig beaufschlagt.

Der Vor- bzw. Rückschub wird entsprechend einer gewünschten Soll-Geschwindigkeit mit dem hydraulischen Stromregel-Ventil 83 durchgeführt. Dabei erzwingt ein analoges elektrisches Signal einen diesem Signal entsprechenden Ölstrom bzw. Ölmenge. Die Geschwindigkeit der Hydraulik- bzw. Antriebs-Zylinder 76,5o hängt proportional mit dem Volumen des Ölstromes zusammen. Sollten beim Ziehen sehr langer Schienenstränge erhöhte Kräfte erforderlich sein, so können beispielsweise auch mehrere Antriebszylinder 5o parallel zu den Hydraulik-Zylindern 76 des Schweißaggregates 15 geschaltet und die Zugkräfte über weitere Schienen-Klemmbacken-Paare 47,48 auf die Schienen übertragen werden. Die geschlossenen bzw. an den Schienensteg anliegenden Schienen-Klemmbacken-Paare 47,48 und die Klemm- und Schweißbacken-Paare 73,74 bilden mit den Hydraulik- und Antriebs-Zylindern 50,76 eine kompakte, zusammengeschlossene Einheit. Dabei werden die verschiedenen Zylinderkolben alle nur mit der gleichen Geschwindigkeit verschoben. Es genügt daher, über das hydraulische Stromregel-Ventil 83 die Summe des benötigten Hydraulik-Öles zu erzeugen.

Entsprechend der für das Hydraulik-Öl wirksamen Fläche der Zylinderkolben teilen sich die Kräfte auf die einzelnen Zylinder 5o,76 auf.

Sobald der für den Schweißvorgang erforderliche Abstand der beiden Schienenendbereiche 42,43 erreicht ist, wird der durch die Schweißprozeß-Steuereinrichtung 14 automatisch gesteuerte Schweißvorgang eingeleitet. Dabei werden nach einem genau gesteuerten Programm in Abhängigkeit von der Stromdurchflußmenge die Schienenendbereiche 42,43 geringfügig zu- und voneinanderbewegt, bis die Schienenenden auf Schmelztemperatur erwärmt sind. Als Abschluß des Schweißvorganges werden die beiden Schienenenden im Rahmen eines sogenannten Stauchschlages unter sehr hohen Kräften durch Zuschaltung des Druckregel-Ventiles 87 mit großem Durchflußvermögen aneinandergepreßt. Dabei bildet sich ein Schweißwulst, der von der Abschervorrichtung 78 unmittelbar danach automatisch abgeschert wird. Anschließend wird das Schweißaggregat 15 unter Beaufschlagung des Antriebes 25 wieder hochgehoben. Danach werden die unteren Jochglieder 61 der Schienenverschiebe-Vorrichtung 16 wieder entfernt und die Vorrichtung 16 unter Verbindung der Laschen 66 der Steckbolzen 63,64 mit der als Seil ausgebildeten Aufhängevorrichtung 35 hochgehoben. Danach werden die unteren Jochglieder 62 wieder mit den Steckbolzen 61 verbunden und die Maschine 1 nach Anhebung der Hubstempel 40 zum nächsten Schienenstoß 44 verfahren.

Wahlweise ist es aber, wie bereits aufgezeigt, auch möglich, die erwähnten geringfügigen Zu- und Voneinanderbewegungen der Schienenenden während des Schweißprozesses allein durch die beiden Hydraulik-Zylinder 76 des Schweißaggregates durchzuführen. In diesem Fall werden die Antriebszylinder 5o der Schienenverschiebe-Vorrichtung 16 für den besonders große Kräfte erfordernden abschließenden Stauchschlag zugeschaltet.

Wie schon teilweise an Hand der Funktionsbeschreibung des beschriebenen Ausführungsbeispieles nach den Fig.1 bis 8 entnehmbar ist, sind mit der beschriebenen Schweißmaschine für das Zusammenschweißen derartiger in Längsrichtung hintereinander liegender bzw. verlegter Schienenstränge oder -stücke, mehrere, voneinander unterschiedliche, vorteilhafte Verfahrensweisen möglich.

Das bevorzugte wichtigste Verfahren zum elektrischen Abbrennstumpf-Verschweißen der beiden aneinander stossenden Enden im Stoßbereich eines solchen Schienenstranges eines verlegten Gleises kann mittels einer solchen mobilen Abbrennstumpf-Schweißmaschine, wie im folgenden beschrieben, durchgeführt werden. Dieses Verfahren ist anwendbar für Schweißmaschinen der verschiedensten Art, wobei aber das Schweißaggregat 15 selbst quer- und höhenverstellbar sein soll und zwei über Hydraulik-Zylinder 76 in Schienenlängsrichtung zueinander verschiebbare Aggregat-Hälften 51,52 mit jeweils einem - über hydraulische Klemm-Zylinder 75 beaufschlagbare Klemm- und Schweißbacken-Paare 73,74 aufweisen muß.

Das Schweißaggregat 15 wird auf den Schienenstoß 44 bzw. die Schienenlücke aufgesetzt, wobei die beiden Schienenenden jeweils von dem elektrisch/hydraulisch beaufschlagbaren Klemm- und Schweißbacken-Paar 73,74 erfaßt und an Hand einer Steuereinrichtung 14 nach einem Schweißprozeß-Programm zu- bzw. voneinanderbewegt und mit abschließendem hydraulischen Stauchschlag miteinander verschweißt werden. Daraufhin wird gegebenenfalls der überstehende Schweißwulst durch neuerliche hydraulische Beaufschlagung des Klemm- und Schweißbacken-Paares 73,74 der einen Aggregat-Hälfte 52 und der anderen mit einer Abschervorrichtung 78 verbundenen Aggregat-Hälfte 51 entfernt. - Die erfindungsgemäßen Verfahrensschritte bestehen nun darin, daß die beiden Schienenenden 42,43 im Bereich unmittelbar außerhalb bzw. vor oder hinter dem Schweißaggregat 15 jeweils zusätzlich von jeweils wenigstens einem weiteren, über Antriebszylinder 5o - der Hydraulik-Zylinder-Kolben-Anordnung 46 - zur Einspannung und Verschiebung beaufschlagbaren Klemmbacken-Paar 47,48 erfaßt werden, insbesondere für das Heranziehen eines langen Schienenstranges vor dem eigentlichen Schweißprozeß und/oder beim anschließenden Stauchschlag in Übereinstimmung mit dem Schweißprozeß-Vorgang. Entsprechend einer weiteren vorteilhaften Variante des erfindungsgemäßen Verfahrens sind die beiden zusätzlichen Antriebszylinder 5o für das Aufbringen dieser zusätzlichen Zug- bzw. Schubkräfte mit den beiden Hydraulik-Zylindern 76 des Schweißaggregates 15 parallel geschaltet und werden an Hand der Steuereinrichtung 77 über eine gemeinsame Antriebsquelle bzw. das Hydraulik-Pumpenaggregat 11 und vorzugsweise dem Stromregel-Ventil 83 mit gleicher Vorschub-Geschwindigkeit beaufschlagt.

Eine weitere vorteilhafte Variante des erfindungsgemässen Verfahrens besteht darin, daß vorerst die beiden zusätzlichen äußeren Klemmbacken-Paare 47,48 zentrisch und beidseits der Schienenlücke aufgesetzt und daß die beiden Schienenenden von diesen durch Beaufschlagung ihrer zugeordneten beiden Antriebszylinder 5o erfaßt werden. Danach wird im Bereich zwischen diesen beiden Klemmbacken-Paaren 47,48 das Schweißaggregat 15 aufgesetzt und die Schienenenden werden von den beiden Klemm- und Schweißbacken-Paaren 73,74 der beiden Schweißaggregat-Hälften 51,52 durch Beaufschlagung ihrer zugeordneten Klemm-Zylinder 75 erfaßt. Dabei wird gegebenenfalls noch vor dem Aufsetzen des Schweißaggregates 15 bzw. der hydraulischen Beaufschlagung der beiden Schweiß- und Klemmbacken-Paare 73,74 einer der beiden aneinandergereihten Schienenstränge durch stärkere Beaufschlagung der mit den beiden äußeren Klemmbacken-Paaren 47,48 verbundenen Antriebszylinder 50 näher zum Schienenstoß 44 herangezogen, um danach mit dem eigentlichen Schweißprozeß vorzugsweise unter Beaufschlagung aller Hydraulik-Zylinder 5o,75,76 an Hand der Steuereinrichtung 14 durchzuführen. Die beiden mit den zusätzlichen Klemmbacken-Paaren 47,48 verbundenen Antriebszylinder 5o werden wenigstens beim abschließenden Stauchschlag des elektrischen Abbrennstumpf-Schweißverfahrens der beiden Schienenenden 42,43 gemeinsam mit den parallel geschalteten und mit den beiden Klemm- und Schweißbacken-Paaren 73,74 zugeordneten Hydraulik-Zylindern 76 - für eine gleichzeitige und gleichmäßig stärkere Schienenverschiebunghydraulisch beaufschlagt.

## Patentansprüche

1. Verfahren zum elektrischen Abbrennstumpf-Verschweißeen der beiden aneinanderstoßenden Enden (42,43) insbesondere im Stoßbereich eines Schienenstranges eines verlegten Gleises (7) mittels einer mobilen Abbrennstumpf-Schweißmaschine (1) mit einem quer- und höhenverstellbaren Schweißaggregat (15), das zwei über Hydraulik-Zylinder (76) in Schienenlängsrichtung zueinander verschiebbare Aggregat-Hälften mit jeweils einem über hydraulische Klemm-Zylinder (75) beaufschlagbaren - Klemm- und SchweßbackenPaar (73,74) aufweist, gemäß welchem das Schweißaggregat (15) auf den Schienenstoß bzw. der Schienenlücke aufgesetzt wird - insbesondere bei vorherigem Lösen bzw. Lockern der Schienenbefestigungen von den Schwellen - und wobei die beiden Schienenenden jeweils von dem elektrisch/hydraulisch beaufschlagbaren Klemm- und Schweißbacken-Paar (73,74) erfaß und an Hand einer Steuereinrichtung (9) nach einem Schweißprozeß-Programm zu- bzw. voneinander bewegt und mit abschließendem hydraulischen Stauchschlag miteinander verschweißt werden, wonach gegebenenfalls der überstehende Schweißwulst durch neuerliche hydraulische Beaufschlagung des Klemm- und Schweißbacken-Paares (73,74) der einen Aggregat-Hälfte und der anderen mit einer Abschermesservorrichtung verbundenen Aggregat-Hälfte entfernt wird, **dadurch gekennzeichnet**, daß die beiden Schienenenden (42,43) im Bereich unmittelbar außerhalb des Schweißaggregates (15) durch Klemmbacken-Paare (47,48) einer Schienen-Zieh- bzw. Verschiebevorrichtung (16) erfaßt und unter gemeinsamer Beaufschlagung der Hydraulik-Zylinder (76) des Schweißaggregates (15) sowie von Antriebszylindern (50) der Vorrichtung (16) die dazu mit den Hydraulik-Zylindern (76) parallel geschaltet sind, miteinander verschweißt werden, wobei die Zylinder (50,76) an Hand einer Steuereinrichtung (14,77) über eine gemeinsame Antriebsquelle mit gleicher Vorschubgeschwindigkeit bewegt werden.

2. Verfahren nach Anspruch 1, dadurch gekennzeichnet, daß vorerst die beiden zusätzlichen äußeren Klemmbacken (47,48) zentrisch und beidseits der Schienenlücke (44) aufgesetzt und daß die beiden Schienenenden (42,43) von diesen durch Beaufschlagung ihrer zugeordneten beiden Antriebszylinder (50) erfaßt werden, wonach im Bereich zwischen diesen beiden Klemmbacken (47,48) das Schweißaggregat (15) aufgesetzt und die Schienenenden (42,43) von den beiden Klemm- und Schweißbacken (73,74) der beiden Schweißaggregat-Hälften (51,52) durch Beaufschlagung ihrer zugeordneten Klemm-Zylinder (75) erfaßt werden, wobei - gegebenenfalls noch vor dem Aufsetzen des Schweißaggregates (15) bzw. der hydraulischen Beaufschlagung der beiden Schweiß- und Klemmbacken (73,74) - einer der beiden aneinandergereihten Schienenstränge (5) durch stärkere Beaufschlagung der mit den beiden äußeren Klemmbacken (47,48) verbundenen Antriebszylinder (50) näher zum Schienenstoß (44) herangezogen wird, um danach den eigentlichen Schweißprozeß vorzugsweise unter Beaufschlagung aller Hydraulik-Zylinder (50,76,75) an Hand der Steuereinrichtung (14,77) durchzuführen.

3. Verfahren nach Anspruch 1 oder 2, dadurch gekennzeichnet, daß die beiden mit den zusätlichen Klemmbacken-Paaren (47,48) verbundenen Antriebszylinder (50) wenigstens beim abschließenden Stauchschlag des elektrischen Abbrennstumpf-Schweißverfahrens der beiden Schienenenden (42,43) gemeinsam mit den parallel geschalteten und mit den, den beiden Klemm- und Schweißbacken-Paaren (73,74) zugeordneten Hydraulik-Zylindern (76) - für eine gleichzeitige und gleichmäßig stärkere Schienen-Verschiebung - hydraulisch beaufschlagt werden.

## Claims

1. A process for the electrical flash butt welding of the two adjoining ends (42, 43) of a rail of a laid track (7), in particular in the joint region, by means of a mobile flash butt welding machine (1) comprising a transversely and vertically adjustable welding unit (15) which consists of two halves displaceable relative to one another in the longitudinal direction of the rail by means of hydraulic cylinders (76) and each comprising a pair of clamping and welding jaws (73, 74) operable through hydraulic clamping cylinders (75), in which the welding unit (15) is placed on the rail joint or rail gap, in particular where the rail fastenings have previously been detached or loosened from the sleepers, and the two rail ends are each gripped by the pair of electrically/hyd-

EP 0 326 794 B1

raulically operable clamping and welding jaws (73, 74) and are moved towards and away from one another with the aid of a control device (9) according to a welding process program and are welded to one another with a final hydraulic compression stroke, after which the projecting weld bead is optionally removed by hydraulic re-activation of the pair of clamping and welding jaws (73, 74) of one half of the welding unit and of the other half thereof connected to a shearing blade arrangement, **characterised in that**, in the region immediately outside the welding unit (15), the two rail ends (42, 43) are gripped by pairs of clamping jaws (47, 48) of a rail-pulling and/or rail-shifting device (16) and are welded to one another with joint activation of the hydraulic cylinders (76) of the welding unit (15) and of drive cylinders (50) of the device (16), which are connected in parallel with the hydraulic cylinders (76) for this purpose, the cylinders (50, 76) being moved with the aid of a control device (14, 77) by means of a common drive source with the same rate of feed.

2. A process according to Claim 1, characterised in that the two additional outer clamping jaws (47, 48) are first centrally placed on both sides of the rail gap (44) and in that the two rail ends (42, 43) are gripped by these by activation of their two associated drive cylinders (50), after which the welding unit (15) is placed in position in the region between these two clamping jaws (47, 48) and the rail ends (42, 43) are gripped by the two clamping and welding jaws (73, 74) of the two halves (51, 52) of the welding unit by activation of their associated clamping cylinders (75), one of the two adjoining rails (5) being moved closer to the rail joint (44) by stronger activation of the drive cylinders (50) connected to the two outer clamping jaws (47, 48), optionally before the welding unit (15) is placed in position or before the two welding and clamping jaws (73, 74) are hydraulically activated, after which the actual welding process is carried out, preferably with all the hydraulic cylinders (50, 76, 75) activated, with the aid of the control device (14, 77).

3. A method according to Claim 1 or 2, characterised in that the two drive cylinders (50) connected to the additional pairs (47, 48) of clamping jaws are hydraulically activated, at least during the final compression stroke of the electrical flash butt welding process of the two rail ends (42, 43), together with the hydraulic cylinders (76) connected in parallel therewith and associated with the two pairs (73, 74) of clamping and welding jaws, for simultaneous and uniformly stronger shifting of the rail.

**Revendications**

1. Procédé pour souder électriquement, par étincelage, bout-à-bout les deux extrémités adjacentes (42, 43), notamment dans la zone de joint d'une file de rails d'une voie (7) posée au moyen d'une machine à souder mobile par étincelage bout-à-bout (1) possédant un groupe de soudage (15) pouvant être déplacé transversalement et en hauteur qui présente deux moitiés de groupe, pouvant être déplacées l'une vers l'autre dans la direction longitudinale du rail par l'intermédiaire de deux vérins hydrauliques (76), comprenant chacune une paire de mâchoires de serrage et de soudage pouvant être sollicitées par des vérins de serrage (75) hydrauliques, dans lequel le groupe de soudage (15) est placé sur le joint de rail ou l'intervalle de rail-notamment après avoir relâché ou desserré les fixations de rails des traverses - et où les deux extrémités de rails sont saisies, respectivement, par la paire de mâchoires de serrage et de soudage (73, 74) sollicitée électriquement/hydrauliquement et sont déplacées l'une vers l'autre ou éloignées l'une de l'autre à l'aide d'un dispositif de commande (9) en fonction d'un programme de processus de soudage et sont soudées l'une à l'autre par un coup de refoulement hydraulique final, à la suite de quoi le bourrelet de soudage en saillie, le cas échéant, est retiré par une nouvelle sollicitation hydraulique de la paire de mâchoires de serrage et de soudage (73, 74) d'une des moitiés de groupe et de l'autre moitié de groupe reliée à un dispositif formant couteau de cisaillement, **caractérisé en ce que** les deux extrémités de rails (42, 43), dans la zone directement à l'extérieur du groupe de soudage (15) sont saisies par les paires de mâchoires de serrage (47, 48) d'un dispositif de traction et de déplacement de rails (16) et sont soudées l'une à l'autre par sollicitation commune des vérins hydrauliques (76) du groupe de soudage (15) ainsi que de cylindres d'entraînement (50) du dispositif (16) qui, à cette fin, sont commutés en parallèle avec les vérins hydrauliques (76), les cylindres (50, 76) étant déplacés à l'aide d'un dispositif de commande (14, 77) par l'intermédiaire d'une source d'entraînement commune, à la même vitesse d'avance.

2. Procédé selon la revendication 1, caractérisé en ce que les deux mâchoires de serrage (47, 48) extérieures supplémentaires sont mises en place, de part et d'autre de l'intervalle de rail (44) et centrées, et en ce que les deux extrémités de rails (42, 43) sont saisies par celles-ci, par sollicitation de leurs deux cylindres d'entraînement (50) qui leurs sont associés, à la suite de quoi le groupe de soudage (15) est mis en place dans la zone entre ces deux mâchoires de serrage (47, 48) et les extrémités de rails (42, 43) sont saisies par les deux mâchoires de serrage et de soudage (73, 74) ces deux moitiés du groupe de soudage (51, 52) par sollicitation de leurs cylindres de serrage (75) associés ou - le cas échéant encore avant la mise en place du groupe de soudage (15) ou de la sollicitation hydraulique des deux mâchoires de serrage et de soudage (73,

11

74) - l'une des deux files de rails (5) adjacente est tirée - plus près du joint de rail (44), par une sollicitation plus forte des cylindres d'entraînement (50) reliés aux deux mâchoires de serrage (47, 48) extérieures pour effectuer ensuite le processus de soudage proprement dit, de préférence, par sollicitation de tous les vérins hydrauliques (50, 76, 75) à l'aide du dispositif de commande (14, 77).

3. Procédé selon la revendication 1 ou 2, caractérisé en ce que les deux cylindres d'entraînement (50) reliés aux paires supplémentaires de mâchoires de serrage (47, 48) sont sollicités hydrauliquement au moins lors du coup final de refoulement du procédé de soudage électrique par étincelage bout-à-bout des deux extrémités de rails (42, 43) conjointement avec les vérins hydrauliques (76) commutés en parallèle et associés aux deux paires de mâchoires de serrage et de soudage (73, 74) pour un déplacement simultané et régulier plus fort des rails.

EP 0 326 794 B1

Fig.1

Fig.2

Fig.3

13

Fig.6

Fig.4

Fig.5

Fig.7

Fig.8